# EUROPÄISCHE PATENTANMELDUNG

(11) **EP 4 822 173 A1**
(43) Veröffentlichungstag der Anmeldung: **14.10.2026**
(21) Anmeldenummer: 25169860.1
(22) Anmeldetag: 10.04.2025
(51) Int. Cl.: F03D 13/20

(54) **SCHWINGUNGSTILGERANORDNUNG ZUR REDUKTION DER WEITERLEITUNG VON VIBRATIONEN UND VERFAHREN ZUR AUSLEGUNG**

(71) Anmelder: Wölfel Engineering GmbH & Co. KG., 97204 Höchberg (DE)
(72) Erfinder: Zech, Philipp, 97204 Höchberg (DE); Eckstein, Manuel, 97204 Höchberg (DE)
(74) Vertreter: Keil & Schaafhausen Patentanwälte PartGmbB

(57) **Zusammenfassung**

Die Erfindung betrifft eine Schwingungstilgeranordnung (40) für einen Turm (10) einer Windenergieanlage (1) mit mindestens zwei Tilgergruppen (41a, 41b, 41c, 41d, 41e), die in einem Endabschnitt (12) des Turms (10) für eine Windenergieanlagen-Gondel (20) angeordnet sind und je eine Vielzahl von Schwingungstilgern (42a, 42b, 42c, 42d, 42e) an einer Umfangswand (14) des Turms (10) umfassen. Die Tilgergruppen (41a, 41b, 41c, 41d, 41e) weisen unterschiedliche Eigenfrequenzen auf. Die Schwingungstilger (42a, 42b, 42C, 42d, 42e) haben je eine Tilgermasse (51), eine elastische Steifigkeit (52) und ein Dämpfungselement (53). Abstände (CS) benachbarter Schwingungstilger (42a, 42b, 42c, 42d, 42e) der gleichen Tilgergruppe (41a, 41b, 41c, 41d, 41e) entlang der Umfangsrichtung (CD) betragen UW/2 * UF, wobei UW eine Umfangs-Wellenlänge für eine Biegeeigenform der Umfangswand (14) in Umfangsrichtung (CD) ist, deren Eigenfrequenz einer Referenzfrequenz F1 am nächsten ist, und jeweils 0 < UF <= 1 ist. Alternativ oder zusätzlich betragen Abstände (LS) benachbarter Tilgergruppen (41a, 41b, 41c, 41d, 41e) entlang einer Längsrichtung (LD) LW/2 * LF, wobei LW eine Längs-Wellenlänge für eine Biegeeigenform der Umfangswand (14) in Längsrichtung (LD) ist, deren Eigenfrequenz der Referenzfrequenz F1 am nächsten ist, und LF jeweils 0 < LF <= 1 ist. Die Erfindung betrifft auch ein Verfahren zur Auslegung einer Schwingungstilgeranordnung (40).

## Beschreibung

Die Erfindung betrifft eine Schwingungstilgeranordnung für einen Turm einer Windkraftanlage und ein Verfahren zur Auslegung einer solchen Schwingungstilgeranordnung.

Eine typische Windenergieanlage umfasst einen Turm, eine Gondel mit einer Rotornabe und mehrere Rotorblätter, die jeweils an der Rotornabe befestigt sind. Im Betrieb entstehen Vibrationen und die Windenergieanlage gibt Schallemissionen ab. Sogenannte "Tonhaltigkeiten" in den Schallemissionen der Windenergieanlage werden als besonders störend empfunden. Sie können zur Verletzung gesetzlicher Beschränkungen für Geräuschemissionen führen. Unter Umständen muss die Leistung der Windenergieanlage gedrosselt werden, um die Geräuschemissionen zu vermindern. Das führt zu wirtschaftlichen Nachteilen.

Die Ursache der Tonhaltigkeiten sind Schwingungsquellen in einem Antriebsstrang der Windenergieanlage. Der Antriebsstrang umfasst beispielsweise einen Generator und ein Getriebe. Der Antriebstrang, insbesondere der Generator und das Getriebe, sind in der Gondel angeordnet. Die dort erzeugten Vibrationen werden in die Rotorblätter und in den Turm übertragen und darin jeweils weitergeleitet. Die akustischen Hauptabstrahler der Tonhaltigkeiten sind der Turm und die Rotorblätter, nicht die Gondel selbst.

Gemäß einem bekannten Ansatz wird versucht, die Vibrationen bereits direkt am Antriebsstrang zu dämpfen. Bei diesem Ansatz werden die Vibrationen schon reduziert, bevor sie von der Gondel an den Turm und die Rotorblätter weitergegeben werden. Die Schwingungsreduktion direkt am Antriebsstrang ist mittels passiver und aktiver Schwingungstilger möglich. Die Auslegung von aktiven und passiven Schwingungstilgern am Antriebsstrang erfordert zunächst eine Charakterisierung der Tonhaltigkeitsprobleme, also beispielswiese die Ermittlung relevanter Frequenzen und der tonalen Hörbarkeiten. Dann erfolgt üblicherweise eine Untersuchung der Schwingungen am Antriebsstrang im Betrieb mittels einer Vielzahl von Beschleunigungssensoren und Messdaten. Aus den Ergebnissen werden - aufbauend auf den Schwingungsformen im Betrieb und der Akustik - geeignete Positionen für Schwingungstilger abgeleitet. Es folgen eine Analyse des zur Verfügung stehenden Bauraums und Konstruktionsaufgaben zur Implementierung einer Schwingungstilgerlösung an dem Antriebsstrang. Die Auslegung von aktiven und passiven Schwingungstilgern direkt an dem Antriebsstrang ist demnach sehr aufwendig. Zudem besteht das Problem, dass der Bauraum am Antriebsstrang sehr begrenzt ist.

Konventionelle passive Schwingungstilger an dem Antriebsstrang bringen den Nachteil mit sich, dass sie - im Vergleich zu aktiven Schwingungstilgern - nur schmalbandig wirken. Sie sind also nur in einem kleinen Frequenzbereich wirkungsvoll. Aktive Schwingungstilger an dem Antriebsstrang sind zwar sehr leistungsfähig, aber auch teuer. Insbesondere für kleinere Tonhaltigkeitsprobleme kann eine Lösung mittels aktivem Schwingungstilger am Antriebsstrang unverhältnismäßig kostenintensiv sein.

US 10,408,194 B2 zeigte ein akustisches Dämpfungssystem für einen Turm einer Windenergieanlage. Der Ansatz besteht darin, den Turm großflächig gegenüber Vibrationen zu dämpfen. Dazu ist es notwendig, Schwingungstilger an allen Stellen des Turms mit Vibrationen über einem gewissen Schwellenwert anzubringen. Die Schwingungstilger müssen großflächig über den Turm verteilt angeordnet werden und an vielen unterschiedlichen Stellen des Turms angebracht sein. Eine derart großflächige Dämpfung mit Schwingungstilgern an vielen unterschiedlichen Stellen des Turms ist aufgrund der hohen Kosten, des hohen zusätzlichen Gewichts der Schwingungstilger und des erforderlichen Aufwandes nachteilig.

Ein anderer Ansatz besteht in der ausreichenden Versteifung des jeweiligen Hauptstrahlers. Aufgrund der dazu erforderlichen hohen Massen, des Aufwandes und der Kosten ist jedoch auch dieser Ansatz mit Nachteilen behaftet.

Aus EP 3 211 218 A1 ist ein akustisches Dämpfungssystem für einen Windturbinenturm bekannt.

Ferner befasst sich EP 2 238 347 A2 mit einem Verfahren zur Verringerung von Schallemissionen von einem Windturbinenturm und mit einer Windturbine.

In CN 114 151 274 A ist ein Rotorblatt für eine Windkraftanlage mit einer Vielzahl von windbeständigen Dämpfungsteilen gezeigt.

US 2023/0154448 A1 beschreibt eine Möglichkeit für die Reduktion von Tonhaltigkeiten bei Windenergieanlagen. Der Ansatz beruht darauf, an einem Turm der Windenergieanlage Resonatoren anzubringen. Dabei sind die Resonatoren auf Eigenfrequenzen des Turms abgestimmt und sorgen durch Reflexion von akustischen Wellen an freien Enden der Resonatoren für eine Minderung der Schwingungen durch destruktive Interferenz. Die Resonatoren sind auf ein Viertel der Wellenlänge der jeweiligen Eigenfrequenz ausgelegt. Da das Prinzip auf destruktiver Interferenz statt auf Dämpfung beruht, sind die Resonatoren konzeptbedingt sehr schmalbandig, selbst verglichen mit passiven Schwingungsdämpfern. Deshalb kann mit dem in US 2023/01548 A1 beschriebenen Ansatz mit vertretbarem wirtschaftlichem und baulichem Aufwand nur für ganz wenige, besonders relevante Eigenfrequenzen des Turms ein guter Effekt erzielt werden.

Außerdem können zwar extreme Vibrationen des Turms mit den wichtigsten Eigenfrequenzen des Turms vermindert werden, aber das Abstrahlen von Schallwellen durch den Turm aufgrund von Schwingungen, die durch das Getriebe und/oder den Generator verursacht werden und Frequenzen haben, die sich von den Eigenfrequenzen des Turms unterscheiden, wird nicht gezielt verhindert.

Die europäische Patentanmeldung mit Anmeldenummer 23211532.9 und die internationale Patentanmeldung PCT/EP2024/082439 beschreiben eine Schwingungstilgeranordnung zur Reduktion der Weiterleitung von Vibrationen, insbesondere für den Turm einer Windenergieanlage.

Die Aufgabe der Erfindung besteht darin, mit einer Schwingungstilgeranordnung an einem Turm einer Windenergieanlage eine besonders breitbandige Reduktion von Tonhaltigkeiten sicherzustellen.

Die Aufgabe wird gelöst durch eine erfindungsgemäße Schwingungstilgeranordnung.

Die Schwingungstilgeranordnung ist für einen Turm einer Windenergieanlage, wobei der Turm an einem Anschlussende (entlang einer Längsrichtung des Turms) zur mechanischen Verbindung mit einer Windenergieanlagen-Gondel eingerichtet ist.

Die Schwingungstilgeranordnung umfasst mindestens zwei Tilgergruppen, welche in einem Endabschnitt des Turms mit dem Anschlussende angeordnet sind und entlang der Längsrichtung voneinander beabstandet sind.

Dabei umfasst jede der Tilgergruppen eine Vielzahl von einzelnen Schwingungstilgern, die an einer Umfangswand Turms entlang einer Umfangsrichtung verteilt angeordnet sind.

Die Tilgergruppen weisen voneinander unterschiedliche Eigenfrequenzen auf.

Die (einzelnen) Schwingungstilger weisen jeweils auf:
eine Tilgermasse;
eine elastische Steifigkeit zur mechanischen Kopplung der Tilgermasse relativ zu der Umfangswand, wobei die Steifigkeit Bewegungen der Tilgermasse relativ zu der Umfangswand erlaubt; und
ein Dämpfungselement zur Dämpfung von den Bewegungen der Tilgermasse relativ zu der Umfangswand durch Reduzierung von Schwingungsenergie.

Abstände benachbarter Schwingungstilger der gleichen Tilgergruppe entlang der Umfangsrichtung betragen jeweils UW/2 * UF, wobei UW eine Umfangs-Wellenlänge für eine Biegeeigenform der Umfangswand entlang der Umfangsrichtung (CD) ist, deren Eigenfrequenz einer Referenzfrequenz F1 am nächsten ist, und wobei UF ein jeweiliger Abstandsfaktor ist, der größer als 0 und maximal 1 ist.

Alternativ oder zusätzlich betragen Abstände benachbarter Tilgergruppen entlang der Längsrichtung jeweils LW/2 * LF, wobei LW eine Längs-Wellenlänge für eine Biegeeigenform der Umfangswand entlang der Längsrichtung ist, deren Eigenfrequenz der Referenzfrequenz F1 am nächsten ist, und wobei LF ein jeweiliger Abstandsfaktor ist, der größer als 0 und maximal 1 ist.

Die Schwingungstilgeranordnung ist zur Reduktion der Weiterleitung von Vibrationen von dem Anschlussende geeignet bzw. eingerichtet, insbesondere zur Reduktion der Weiterleitung von Vibrationen von dem Anschlussende hin zu einem Abschnitt des Turms jenseits des Endabschnitts.

Die Weiterleitung der Vibrationen aufgrund von Schwingungen des Antriebsstranges wird lokal in einem Endabschnitt eines Turmkopfs reduziert. An dem Turm muss jenseits des Endabschnitts keine weitere Schwingungsdämpfung implementiert zu werden. Der Turm braucht also nicht "global" gedämpft zu werden. Das sorgt für niedrige Kosten.

Bei einer konventionellen globalen Dämpfung der Turmwand, wie beispielsweise in der US 10,408,194 B2 gezeigt, muss eine Vielzahl von Schwingungstilgern über große Bereiche des Turms verteilt angeordnet werden. Das sorgt für einen großen Aufwand, ein großes Gewicht und hohe Kosten.

Die Schwingungstilgeranordnung schirmt den Rest des Turms ab von den Vibrationen, die an dem Anschlussende eingebracht werden.

Die Reduzierung von Schwingungsenergie durch das jeweilige Dämpferelement kann insbesondere die Umwandlung von Schwingungsenergie in Wärme umfassen. Alternativ oder zusätzlich kann sie die Generierung von Induktionsströmen und/oder Fluidströmungen zum Bremsen der relativen Bewegung der zugehörigen Tilgermasse relativ zu der Umfangswand umfassen.

Aufgrund der (gegebenenfalls) besonders kleinen Abstände der Tilgergruppen entlang der Längsrichtung sind die Schwingungstilger in der Längsrichtung so nahe beieinander, dass sie für Biegeschwingungen mit der Längs-Wellenlängen als zusammenhängendes Dämpfungsgebiet erscheinen. Die Schwingungstilger erscheinen entlang der Längsrichtung nicht als einzelne lokale Dämpfungselemente, sondern zumindest im Wesentlichen als eine zusammenhängende Dämpfungsbarriere. Das sorgt für eine besonders ausgeprägte und zuverlässige Verminderung, dass Vibrationen von dem Anschlussende (insbesondere Vibrationen, die von einem Getriebe und/oder einem Generator in der Windenergieanlagen-Gondel stammen) weiter nach unten in den Turm propagieren können. Das gilt auch für Vibrationen mit Frequenzen kleiner als der Referenzfrequenz F1 und entsprechend größeren (Längs-)Wellenlängen.

Aufgrund der (gegebenenfalls) besonders kleinen Abstände der Schwingungstilger in der jeweiligen Tilgergruppe entlang der Umfangsrichtung sind die Schwingungstilger in der Umfangsrichtung so nahe beieinander, dass sie für Biegeschwingungen mit der Umfangs-Wellenlängen als zusammenhängendes Dämpfungsgebiet erscheinen. Die Schwingungstilger erscheinen entlang der Umfangsrichtung nicht als einzelne lokale Dämpfungselemente, sondern zumindest im Wesentlichen als eine zusammenhängende Dämpfungsbarriere. Die dichte Staffelung entlang der Umfangsrichtung sorgt dafür, dass die jeweilige Tilgergruppe entlang der Umfangsrichtung praktisch gleichmäßig wirkt. Das gilt auch für Vibrationen mit Frequenzen kleiner als der Referenzfrequenz F1 und entsprechend größeren (Umfangs-)Wellenlängen.

Die Kombination zwischen den besonders kleinen Abständen der Schwingungstilger entlang der Umfangsrichtung der den besonders kleinen Abständen der Tilgergruppen entlang der Längsrichtung sorgt für ein kontinuierliches zusammenhängendes Dämpfungsgebiet in der Umfangswand (Turmwand). Für Vibrationen mit der Referenzfrequenz F1 (und niedrigeren Frequenzen mit noch längeren Längs-Wellenlängen und Umfangs-Wellenlängen) entsteht effektiv gesehen ein durchgängiger, sowohl in der Längsrichtung als auch in der Umfangsrichtung räumlich ausgedehnter Dämpfungsbereich in der Umfangswand. Das stellt sicher, dass nicht einzelne kleine Passagen relevante Vibrationen/Schwingungen durchlassen. Selbst kleine Bereiche ohne ausreichende Dämpfung könnten ansonsten als Ausgangspunkt dafür dienen, dass sich Vibrationen unterhalb der Schwingungstilgeranordnung von dort ausgehend in de Längsrichtung und/oder in der Umfangsrichtung neu ausbreiten.

Die einzelnen Schwingungstilger dazu eingerichtet sein, dass ihre Steifigkeit Bewegungen der Tilgermasse in einer radialen Richtung (des Turms) relativ zu der Umfangswand erlaubt.

Gemäß einem Aspekt kann die Schwingungstilgeranordnung mindestens drei, mindestens vier Tilgergruppen oder sogar mindestens fünf Tilgergruppen aufweisen. Das verbessert die Reduktion der Weiterleitung von Vibrationen noch weiter. Gemäß einem Aspekt ist die Referenzfrequenz F1 eine Frequenz von Vibrationen, die von einem Antriebsstrang der Windenergieanlagen-Gondel, beispielsweise einem Getriebe und/oder einem Generator in der Windenergieanlagen-Gondel, erzeugt werden. Es hat sich herausgestellt, dass solche Vibrationen Ursache von problematischen Schallemissionen von Windenergieanlagen sein können.

Alternativ oder zusätzlich ist es möglich, dass die Referenzfrequenz F1 nicht auf eine Eigenfrequenz des Turms ausgelegt ist, insbesondere keine "native" Eigenfrequenz des Turms (als solchem). Die Schwingungstilgeranordnung dient primär dazu, das Vordringen von problematischen Vibrationen in den Turm bereits im Keim zu ersticken, bevor größere Bereiche des Turms zu Schwingungen angeregt werden.

Die Auslegung der Schwingungstilgeranordnung ist darauf ausgerichtet, welche Frequenzen von der Windenergieanlagen-Gondel in das Anschlussende des Turms eingebracht werden, nicht darauf, welche eigenen besonderen Resonanzen der Turm als solcher aufweist.

In einer Ausführungsform ist der Abstandsfaktor UF jeweils mindestens 0,3. Ein kleinerer Abstandsfaktor UF führt zu kleineren Abständen der Schwingungstilger entlang der Umfangsrichtung. Das bedeutet auch, dass eine höhere Anzahl von Schwingungstilgern benötigt wird. Es wurde herausgefunden, dass ein Abstandsfaktor UF kleiner als 0,3 trotz des höheren konstruktiven und finanziellen Aufwands zu keiner nennenswerten Verbesserung der Geräuschminderung mehr führt.

Entsprechend kann der Abstandsfaktor LF jeweils mindestens 0,3 betragen. Die genannten Erwägungen gelten analog.

Alternativ oder zusätzlich kann der Abstandsfaktor UF jeweils maximal 0,7 sein. Die Umfangs-Wellenlängen UW für die modalen Biegeschwingungen der Umfangswand mit derjenigen Eigenfrequenz, die der Referenzfrequenz F1 am nächsten liegt, können im Allgemeinen von verschiedenen Faktoren beeinflusst werden, beispielsweise von dem Material bzw. den Materialien der Umfangswand, der genauen Struktur der Umfangswand, einem Durchmesser der Umfangswand, einer Wanddicke der Umfangswand, etc. Die Einflüsse lassen sich bei der Auslegung der Schwingungstilgeranordnung berücksichtigen. Dennoch kann es in der Praxis zu Abweichungen kommen. Außerdem können externe Faktoren wie die Temperatur und Windlasten einen Einfluss haben. Es wurde herausgefunden, dass ein Abstandsfaktor UF von 0,7 ausreicht, um etwaigen Ungenauigkeiten und Einflüssen ausreichend Rechnung zu tragen.

In einer Ausführungsform ist der Abstandsfaktor LF jeweils maximal 0,7 sein. Die genannten Erwägungen gelten analog.

Die Abstandsfaktoren UF und die Abstandsfaktoren LF können gleich sein. Das erleichtert die Auslegung der Schwingungstilgeranordnung.

In einer Ausführungsform ist eine oberste Tilgergruppe dem Anschlussende entlang der Längsrichtung am nächsten angeordnet ist. Eine unterste Tilgergruppe ist dem Anschlussende in der Längsrichtung am fernsten angeordnet ist. Dabei können die Schwingungstilger der obersten Tilgergruppe die Referenzfrequenz F1 als Eigenfrequenz haben und die Schwingungstilger der untersten Tilgergruppe können eine Eigenfrequenz FN haben. Alternativ können die Schwingungstilger der untersten Tilgergruppe die Referenzfrequenz F1 als Eigenfrequenz haben und die Schwingungstilger der obersten Tilgergruppe können eine Eigenfrequenz FN haben. Die Eigenfrequenz FN unterscheidet sich von der Referenzfrequenz F1.

Mit anderen Worten können die Schwingungstilger einer der in der Längsrichtung "äußersten" Tilgergruppe die Referenzfrequenz F1 als Eigenfrequenz haben.

Als die Referenzfrequenz kann die höchste Frequenz von Vibrationen gewählt werden, die reduziert werden sollen. Niedrigere Frequenzen gehen einher mit längeren Wellenlängen. Wenn eines oder mehrere der oben genannten Abstandskriterien für die Schwingungstilger für die Referenzfrequenz F1 als höchste Frequenz erfüllt sind, sind sie typischerweise auch für niedrigere Frequenzen erfüllt.

Gemäß einem Aspekt kann die Eigenfrequenz FN niedriger sein als die Referenzfrequenz F1 und eine Anzahl der Tilgergruppen ist N (N>=3, möglicherweise N>=4 oder gar N >= 5).

Die Eigenfrequenz der Schwingungstilger der K-ten Tilgergruppe kann sich jeweils ergeben als FK = F1 - (K - 1)*(F1 - FN)/(N - 1), wobei die Zahl K die Position der jeweiligen Tilgergruppe in der Reihenfolge der Tilgergruppen entlang der Längsrichtung von der Tilgergruppe mit der Referenzfrequenz F1 als Eigenfrequenz zu der Tilgergruppe mit der Eigenfrequenz FN hin angibt.

Die jeweilige Tilgergruppe kann einen Weiterleitungsreduktionsbereich um ihre Eigenfrequenz aufweisen. Insbesondere kann die einzelnen Schwingungstilger der jeweiligen Tilgergruppen eine frequenzabhängige Reduktion von Vibrationen und damit auch der Weiterleitung von Vibrationen aufweisen. Dies lässt sich durch eine Weiterleitungsreduktionskurve mit dem Weiterleitungsreduktionsbereich um die zugehörige Eigenfrequenz herum darstellen. In einer Ausführungsform überlappt der Weiterleitungsreduktionsbereich einer jeweiligen der Tilgergruppe mindestens mit einem der Weiterleitungsreduktionsbereich einer anderen der Tilgergruppen.

Gemäß einem Aspekt können die Eigenfrequenzen der Schwingungstilger für entlang der Längsrichtung benachbarte Tilgergruppen jeweils so nahe beieinander liegen, dass sich die Weiterleitungsreduktionskurven der Schwingungstilger benachbarter Tilgergruppen über der Frequenz jeweils derart überlappen, dass an einem Schnittpunkt der jeweiligen Weiterleitungsreduktionskurven für beide Weiterleitungsreduktionskurven die frequenzabhängigen Reduktionen, in einer Maßangabe gemäß dekadischem Logarithmus, jeweils noch gleich stark oder stärker sind als die Hälfte eines Reduktionsziels und/oder einer Maximalreduktion der jeweiligen Weiterleitungsreduktionskurve.

Gemäß einem Aspekt ist die Schwingungstilgeranordnung (dazu eingerichtet ist, eine akustische Abstrahlung von dem Turm aufgrund von Vibrationen eines Antriebsstrangs der Windenergieanlagen-Gondel zu reduzieren, indem sich durch eine Superposition der Weiterleitungsreduktionskurven aller Tilgergruppen ein Weiterleitungsbarriere für Biegewellen der Umfangswand im Bereich der Schwingungstilgeranordnung ergibt. Dadurch wird die Schwingungsanregung für die Abschnitte der Umfangswand unterhalb der Schwingungstilgeranordnung reduziert, wodurch die akustische Abstrahlung reduziert wird.

Biegewellen der Umfangswand weisen Amplituden in Richtung einer (lokalen) Oberflächennormalen der Umfangswand auf.

Das oben genannte Problem wird auch gelöst durch eine Schwingungstilgeranordnung für einen Turm einer Windenergieanlage, wobei der Turm an einem Anschlussende entlang einer Längsrichtung des Turms zur mechanischen Verbindung mit einer Windenergieanlagen-Gondel eingerichtet ist, wobei die Schwingungstilgeranordnung mindestens zwei Tilgergruppen umfasst, welche in einem Endabschnitt des Turms mit dem Anschlussende angeordnet sind und entlang der Längsrichtung voneinander beabstandet sind,
wobei jede der Tilgergruppen eine Vielzahl von einzelnen Schwingungstilgern umfasst, die an einer Umfangswand des Turms entlang einer Umfangsrichtung verteilt angeordnet sind,
wobei die Schwingungstilger jeweils aufweisen:
eine Tilgermasse;
eine elastische Steifigkeit zur mechanischen Kopplung der Tilgermasse relativ zu der Umfangswand, wobei die Steifigkeit Bewegungen der Tilgermasse relativ zu der Umfangswand erlaubt;
ein Dämpfungselement zur Dämpfung von den Bewegungen der Tilgermasse relativ zu der Umfangswand durch Reduzierung von Schwingungsenergie;
wobei die Tilgergruppen voneinander unterschiedliche Eigenfrequenzen aufweisen, und
wobei Eigenfrequenzen der Schwingungstilger für entlang der Längsrichtung benachbarte Tilgergruppen jeweils so nahe beieinander liegen, dass sich Weiterleitungsreduktionskurven der Schwingungstilger benachbarter Tilgergruppen über die Frequenz jeweils derart überlappen, dass an einem Schnittpunkt der jeweiligen Weiterleitungsreduktionskurven für beide Weiterleitungsreduktionskurven die frequenzabhängigen Reduktionen, in einer Maßangabe gemäß dekadischem Logarithmus, jeweils noch gleich stark oder stärker sind als die Hälfte eines Dämpfungsziels und/oder einer Maximalreduktion der jeweiligen Weiterleitungsreduktionskurven.

Gemäß einem Aspekt können die einzelnen Schwingungstilger jeweils eine dediziert Tilgermasse aufweisen.

Die Steifigkeit kann die relative Bewegung der kompletten Tilgermasse (der Tilgermasse als Ganzes) relativ zu der Umfangswand erlauben.

Die Ausführungsformen, Modifikationen und Vorteile bezüglich des oben beschriebenen Schwingungstilgeranordnung können entsprechend für diese gelten, und umgekehrt.

In einer Ausführungsform hat die gesamte Schwingungstilgeranordnung entlang der Längsrichtung eine Längenausdehnung, die in einem Bereich von 100 % bis 500 % der Längs-Wellenlänge LW liegt. Die Schwingungstilgeranordnung fällt also auch bei einer Vielzahl von Tilgergruppen sehr kompakt aus, um einen räumlich zusammenhängenden und "dichten" Dämpfungsabschnitt auszubilden.

Die Schwingungstilgeranordnung kann derart angeordnet sein, dass sie im Vergleich zu einer Masse eines Abschnitts der Umfangswand, über welchen sich die Schwingungstilgeranordnung entlang der Längsrichtung erstreckt, eine Masse im Bereich von mindestens 1 % und/oder bis zu 20 % aufweist. Eine gewisse Mindestmasse der Schwingungstilgeranordnung (und insbesondere der Tilgermassen) ist vorteilhaft, um eine starke Dämpfung zu erreichen. Bei einem großen Wert der summierten Tilgermassen bringt eine weitere Steigerung des Werts allerdings keinen großen Vorteil mehr mit sich. Eine größere Gesamtmasse der Tilgermassen erhöht allerdings den konstruktiven und wirtschaftlichen Aufwand. Der angegebene Minimalwert stellt eine gute Effektivität wieder, der angegebene Maximalwert ein Limit für eine wirtschaftliche Implementierung.

Die Dämpfungselemente der Schwingungstilger Elastomer-Dämpfungselemente umfassen. Die Elastomer-Dämpfungselemente können Schwingungsenergie durch Wärmeabgabe dissipieren.

Die Dämpfungselemente (zumindest teilweise, ggf. auch vollständig) aus Silikonschaum gefertigt sind. Hierdurch wird eine besonders gute Dämpfung bei leichtem Gewicht der Dämpfungselemente ermöglicht.

Die Schwingungstilger können magnetisch an dem Turm befestigbar bzw. befestigt sein. Insbesondere können die Schwingungstilger Magnetfüße zur Befestigung an der Umfangswand aufweisen.

Gemäß einem Aspekt kann der Turm zumindest teilweise hohl sein.

In einer Ausführungsform sind die einzelnen Schwingungstilger der jeweiligen Tilgergruppe ringförmig angeordnet. Jede Tilgergruppe bildet einen "Tilgerring". Die Tilgerringe sind in der Längsrichtung voneinander beabstandet. Alle Tilgerringe sind in dem Endabschnitt angeordnet. Das erlaubt eine einfache Planung und Installation.

In einer Ausführungsform umfasst die Schwingungstilgeranordnung maximal zwölf Tilgergruppen (bspw. Tilgerringe), möglicherweise maximal sieben. Es hat sich gezeigt, dass sich die Tonhaltigkeiten damit ausreichend bewältigen lassen. Eine geringere Anzahl von Tilgergruppen spart Aufwand und Kosten.

Gemäß einem Aspekt können einzelne Schwingungstilger im Endabschnitt in Längsrichtung voneinander beabstandet hintereinander angeordnet werden. Die "Längsinstallation" wird in der Umfangsrichtung jeweils in Winkelabständen voneinander beabstandet wiederholt, bevorzugt um den kompletten Umfang herum. Dadurch werden die entlang der Längsrichtung voneinander beabstandeten Tilgergruppen gebildet.

Gemäß einem Aspekt können sind die einzelnen Schwingungstilger der jeweiligen Tilgergruppe gleichmäßig entlang der Umfangsrichtung verteilt angeordnet sein. Sie können beispielsweise in gleichen Abständen entlang der Umfangsrichtung und/oder in gleichen Winkelabständen rund um eine (ggf. lokale) Längsachse und/oder Mittelachse des Turms an der Stelle des jeweiligen Tilgerrings angeordnet sein.

Das Anschlussende ist das gondelseitige Ende des Turms. Der Endabschnitt ist ein gondelseitiger Endabschnitt. Obwohl die Ursache der Tonhaltigkeiten der Windenergieanlage Schwingungsquellen im Antriebsstrang in der Gondel sind, ist die Gondel nicht der akustische Hauptabstrahler der störenden Schallemissionen. Die akustischen Hauptabstrahler sind der Turm und die Rotorblätter der Windenergieanlage. Es genügt, die Weiterleitung der Vibrationen im gondelseitigen Endabschnitt zu reduzieren. Zwar können die Vibrationen an dem Anschlussende (am gondelseitigen Ende) des Turms noch auf den Turm übergehen, ihre Weiterleitung in dem Turm wird jedoch noch in dem (gondelseitigen) Endabschnitt reduziert. Sie können sich nicht frei entfalten und ein Risiko der Emission störender Tonhaltigkeiten wird vermindert. In der Gondel selbst kann gegebenenfalls auf einen aktiven und/oder Schwingungstilger verzichtet werden. Das spart Kosten und Bauraum in der Gondel.

Der Windenergieanlagen-Turm ist ein Turm einer Windenergieanlage bzw. ein Turm für eine Windenergieanlage.

Der Endabschnitt ist ein oberer Bereich des Turms (ein Turmkopf). Die Schwingungstilgeranordnung kann komplett lokal im Turmkopf installiert sein. Auf dem Turmkopf sitzt die Gondel. Über die Verbindung treten Vibrationen von der Gondel auf den Turmkopf über, werden aber durch die Schwingungstilgeranordnung noch innerhalb des Turmkopfs reduziert.

Gemäß einem Aspekt sind die Tilgergruppen (die einzelnen Schwingungstilger) an einer Innenseite der Umfangswand angebracht. Das schützt die Schwingungstilger vor Witterungseinflüssen und erleichtert die Installation. Zudem kann dadurch die äußere Optik des Turms verbessert werden.

In einer Weiterbildung liegen Eigenfrequenzen der Tilgergruppen in einem Bereich von 50 Hz bis 500 Hz. In der Praxis sind Vibrationen in diesem Bereich häufig für störende Tonhaltigkeiten verantwortlich, deshalb sollte Ihre Weiterleitung besonders reduziert werden.

Innerhalb der jeweiligen Tilgergruppe können alle einzelnen Schwingungstilger die gleiche Eigenfrequenz aufweisen. Die Eigenfrequenz einer Tilgergruppe meint die Eigenfrequenzen der einzelnen Schwingungstilger dieser Tilgergruppe. Alternativ oder zusätzlich können innerhalb der jeweiligen Tilgergruppe alle einzelnen Schwingungstilger vom gleichen Typ sein. Insbesondere können innerhalb der jeweiligen Tilgergruppe alle einzelnen Schwingungstilger baugleich sein.

Die Eigenfrequenz des jeweiligen einzelnen Schwingungstilger kann anhand einer Tilgermasse und einer Steifigkeit des einzelnen Schwingungstilgers ausgelegt werden. Auch das Dämpfungselement kann einen Einfluss haben. Eine Weiterleitungsreduktionskurve des Schwingungstilgers rund um seine Eigenfrequenz kann durch die Konstruktion und Abstimmung beeinflusst werden.

Wie oben erwähnt weisen die Tilgergruppen voneinander unterschiedliche Eigenfrequenzen auf. Jede Tilgergruppe hat eine individuelle Eigenfrequenz. Das ermöglicht eine weitbandige Reduktion von Vibrationen bzw. eine Reduktion in mehreren Frequenzbereichen. Jede der Eigenfrequenzen der Tilgergruppen ist jeweils auf eine Zielfrequenz ausgelegt, um die Tonhaltigkeit der Windenergieanlage zu mindern.

Die einzelnen Schwingungstilger einer jeweiligen Tilgergruppe können sich in ihrer Tilgermasse, in ihrer Steifigkeit und/oder in ihrem Dämpfungselement von den einzelnen Schwingungstilgern der anderen Tilgergruppen unterscheiden.

Das ist ein effektiver Ansatz, um die Reduktion von Vibrationen für verschiedene Frequenzen bzw. Frequenzbereiche zu implementieren.

Gemäß einem weiteren Aspekt umfasst jede Tilgergruppe mindestens 5 Schwingungstilger. Das hilft, eine hohe Reduktion der Weiterleitung von Vibrationen zu ermöglichen.

In einer Weiterbildung ist mindestens einer der Tilgergruppen in einem Bereich angeordnet, der sich von dem Anschlussende ausgehend über 10 % einer Gesamtlänge des Turms entlang der Längsrichtung erstreckt. Dadurch wird zumindest ein Teil der Vibrationen in unmittelbarer Nähe des Anschlussendes reduziert, an welchem die Vibrationen in den Turm eingebracht werden. Insbesondere können mindestens zwei oder sogar mindestens drei der Tilgergruppen in dem Bereich angeordnet sein, der sich von dem Anschlussende ausgehend über 10 % der Gesamtlänge des Turms entlang der Längsrichtung erstreckt.

In einer Ausführungsform erstreckt sich der Endabschnitt von dem Anschlussende ausgehend über maximal 14 %. Der Endabschnitt erstreckt sich nicht weit von dem Anschlussende weg. Die Reduktion der Vibrationen erfolgt nahe dem Anschlussende, an welchem die für die Tonhaltigkeiten maßgeblichen Schwingungen eingebracht werden. So wird verhindert, dass der Turm großflächig als starker akustischer Hauptabstrahler wirkt.

Alternativ oder zusätzlich kann die Schwingungstilgeranordnung komplett in dem Endabschnitt angeordnet sein. Alle einzelnen Schwingungstilger der Schwingungstilgeranordnung sind ausschließlich innerhalb des Endabschnitts angeordnet. Außerhalb des Endabschnitts weist die Schwingungstilgeranordnung keine Schwingungstilger an dem Turm auf.

In einer Weiterbildung sind alle einzelnen Schwingungstilger passive Schwingungstilger. Passive Schwingungstilger sind einfacher auszulegen und kostengünstiger. Durch das Vorsehen mehrerer Tilgergruppen mit unterschiedlichen Eigenfrequenzen lässt sich eine "Dämpfungsbarriere" mit hoher Bandbreite implementieren. Die passiven Schwingungstilger können die Tilgermasse, die Steifigkeit, und das Dämpfungselement aufweisen. Die Tilgermasse ist über die Steifigkeit mechanisch an das erste Bauelement gekoppelt. Die Tilgermasse kann aus Metall gefertigt sein, beispielsweise aus Stahl. Alternativ oder zusätzlich kann die Steifigkeit aus Metall gefertigt sein, beispielsweise aus Stahl. Wie oben erwähnt kann das Dämpfungselement aus Elastomermaterial gefertigt sein, beispielsweise aus Silikonschaum.

Über die Abstände der Tilgergruppen entlang der Längsrichtung, die Anzahlen der einzelnen Schwingungstilger pro Tilgergruppe, die Tilgermassen der einzelnen Schwingungstilger, die Anzahl der Tilgergruppen sowie die Abstimmung der Eigenfrequenzen der Tilgergruppen können sowohl der Frequenzbereich (bzw. die Frequenzbereiche) als auch eine gewünschte Amplitudenreduktion ausgelegt werden. Die vorliegende Offenbarung enthält spezifische Angaben, welche Auslegungseffekte zu besonders vorteilhaften Effekten führen.

Die einzelnen Schwingungstilger können jeweils mittels Magnetfuß, Kleben, Schrauben und/oder Schweißen an dem ersten Bauelement befestigt sein.

Das oben genannte Problem wird ferner gelöst durch einen Windenergieanlagen-Turm, welcher die Schwingungstilgeranordnung gemäß einer der beschriebenen Ausführungsformen umfasst.

Das oben genannte Problem wird außerdem gelöst durch eine Windenergieanlage mit einer Schwingungstilgeranordnung gemäß einer der beschriebenen Ausführungsformen umfasst.

Die zuvor beschriebenen Ausführungsformen und Vorteile gelten jeweils entsprechend.

Das oben genannte Problem wird ferner gelöst durch ein Verfahren zur Auslegung einer Schwingungstilgeranordnung für einen Turm einer Windenergieanlage mit einer Umfangswand des Turms, beispielsweise für eine erfindungsgemäße Schwingungstilgeranordnung und/oder für eine erfindungsgemäße Windenergieanlage mit:
- Anordnung von Schwingungstilgern mit Dämpfungseigenschaften in mindestens zwei Tilgergruppen an der Umfangswand, wobei die Schwingungstilger jeweils eine Tilgermasse, eine elastische Steifigkeit zur mechanischen Kopplung der Tilgermasse relativ zu der Umfangswand und ein Dämpfungselement zur Dämpfung von den Bewegungen der Tilgermasse relativ zu der Umfangswand durch Dämpfung von Bewegungen der Tilgermasse relativ zu der Umfangswand durch Reduzierung von Schwingungsenergie, wobei die Tilgergruppen voneinander unterschiedliche Eigenfrequenzen aufweisen,
- Anordnung der Schwingungstilger, sodass:
   Abstände benachbarter Schwingungstilger der gleichen Tilgergruppe entlang einer Umfangsrichtung des Turms UW/2 * UF betragen, wobei UW eine Umfangs-Wellenlänge für eine Biegeeigenform der Umfangswand entlang der Umfangsrichtung ist, deren Eigenfrequenz einer Referenzfrequenz F1 am nächsten ist, und UF ein Abstandsfaktor ist, der jeweils größer als 0 und maximal 1 ist, und/oder
   Abstände benachbarter Tilgergruppen entlang einer Längsrichtung des Turms LW/2 * LF betragen, wobei LW eine Längs-Wellenlänge eine Biegeeigenform der Umfangswand entlang der Längsrichtung ist, deren Eigenfrequenz der Referenzfrequenz F1 am nächsten ist, und LF ein Abstandsfaktor ist, der jeweils größer als 0 und maximal 1 ist.

Die bezüglich der Schwingungstilgeranordnungen, des Windenergieanlagen-Turms und der Windenergieanlage beschriebenen Ausführungsformen, Modifikationen können entsprechend bezüglich des Verfahrens gelten, um umgekehrt.

Das Verfahren kann ferner umfassen
- Bestimmen der Referenzfrequenz F1, wobei die Referenzfrequenz F1 einer Vibration eines Getriebes und/oder eines Generators der Windenergieanlage entspricht.

Dadurch wird die Weiterleitung entsprechender Vibrationen bereits im oberen Endabschnitt des Turms zielgerichtet unterbunden.

Gemäß einem Aspekt kann das Verfahren umfassen:
- Bestimmen der Längs-Wellenlänge LW ausgehend von der Referenzfrequenz F1.

Alternativ oder zusätzlich kann das Verfahren umfassen:
- Bestimmen der Umfangs-Wellenlänge UW ausgehend von der Referenzfrequenz F1.

Wie zuvor beschrieben kann es sich bei der Referenzfrequenz F1 um eine spezifische Frequenz F1 haben.

Die Erfindung wird nachfolgend anhand von Ausführungsbeispielen und unter Bezugnahme auf die Figuren erläutert. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

### Es zeigen schematisch:

- Fig. 1: eine Windenergieanlage mit einem Turm, einer Gondel und mehreren Rotorblättern, wobei der Turm und die Rotorblätter jeweils eine Schwingungstilgeranordnung aufweisen;
- Fig. 2: eine Ausführungsform einer Schwingungstilgeranordnung für den Turm der Windenergieanlage in Fig. 1;
- Fig. 3: einen Aufbau eines einzelnen Schwingungstilgers der Schwingungstilgeranordnungen in Fig. 1 und Fig. 2;
- Fig. 4: ein Überlappen der frequenzabhängigen Weiterleitungsreduktionskurven der Schwingungstilger verschiedener Schwingungstilgergruppen in der Schwingungstilgeranordnung in Fig. 1 und Fig. 2.

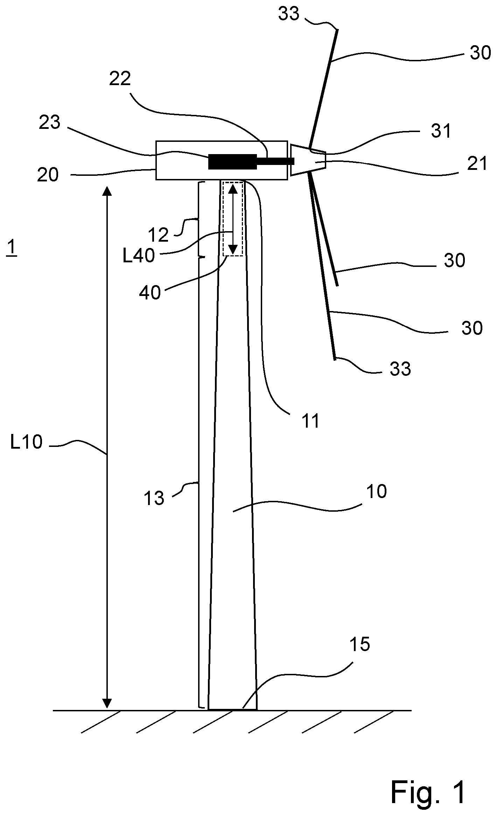

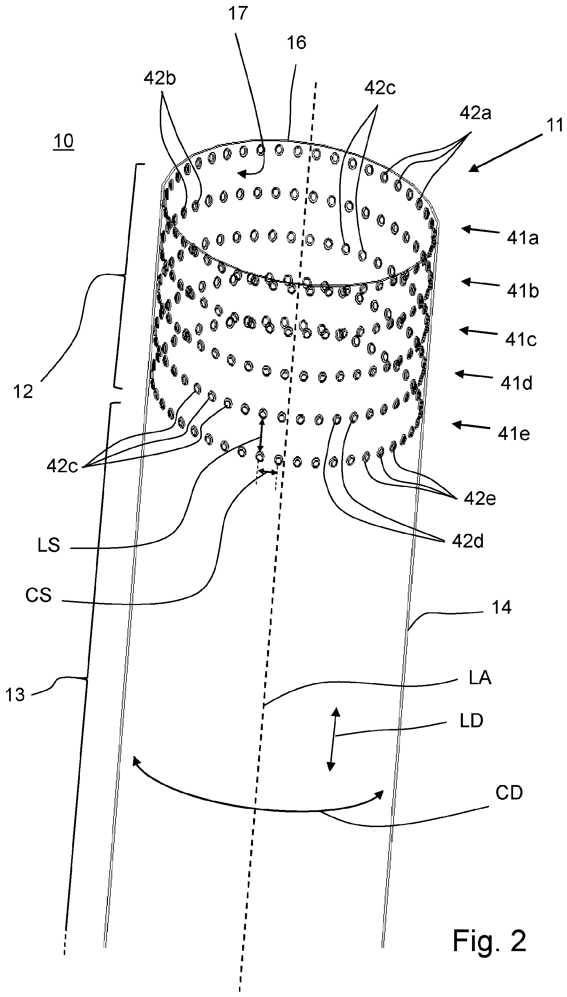

Fig. 1 zeigte eine Seitenansicht einer Ausführungsform einer Windenergieanlage 1 mit einem Turm 10, einer Gondel 20 und mehreren Rotorblättern 30, hier genauer gesagt mit drei Rotorblättern 30. Der Turm 10 erstreckt sich entlang einer Längsrichtung LD (siehe Fig. 2) mit einer Gesamtlänge L10 von einem unteren Ende 15 am Boden vertikal nach oben bis zu einem oberen Ende. Das obere Ende bildet ein Anschlussende 11 für die Gondel 20. Die Gondel 20 ist auf das Anschlussende 11 des Turms 10 aufgesetzt.

Die Gondel 20 umfasst eine Rotornabe 21. Die Rotorblätter 30 sind jeweils mit ihrer Blattwurzel 31 an der Rotornabe 21 befestigt.

In der Gondel 20 befindet sich ein Antriebsstrang, der beispielsweise ein Getriebe 22 und einen Generator 23 umfasst. Im Betrieb der Windenergieanlage 1 sorgt der Antriebstrang für Schwingungen bzw. Vibrationen. Die Vibrationen werden an dem Anschlussende 11 (dem oberen Ende) des Turms 10 in den Turm 10 eingebracht. Wenn keine Maßnahmen getroffen werden, dann kann der Turm 10 als Hauptabstrahler von Schallemissionen störender Tonhaltigkeiten in Erscheinung treten.

Zur Reduktion der Weiterleitung von Vibrationen von dem Anschlussende 11 (dem oberen Ende) des Turms 10, auf welchem die Gondel 20 ruht, in einen Hauptbereich 13 des Turms 10 ist in einem oberen Endabschnitt 12 des Turms 10 eine Schwingungstilgeranordnung 40 installiert. Der Endabschnitt 12 des Turms 10 schließt unmittelbar an das Anschlussende 11 (das obere Ende) des Turms 10 mit der Gondel 20 an. Der Endabschnitt 12 des Turms 10 an dem Anschlussende 11 bildet sozusagen einen "Turmkopf".

Für die Schwingungstilgeranordnung 40 bildet der Turm 10 ein längliches erstes Bauelement zur Verbindung mit einem zweiten Bauelement, nämlich der Gondel 20, an dem Anschlussende 11 des Turms 10.

Der Turm 10 hat eine Umfangswand 14.

Der Turm 10 ist zumindest teilweise "hohl". Er bildet zumindest abschnittsweise einen Turminnenraum aus.

Fig. 2 zeigt die Schwingungstilgeranordnung 40 im Detail. Sie ist komplett in dem Turmkopf 20 installiert.

Die Schwingungstilgeranordnung 40 umfasst eine Vielzahl von Tilgergruppen 41a, 41b, 41c, 41d, 41e. Hier sind exemplarisch fünf Tilgergruppen 41a, 41b, 41c, 41d, 41e gezeigt. Alle Tilgergruppen 41a, 41b, 41c, 41d, 41e sind ausschließlich in dem Endabschnitt 12 des Turms 10 an dem Anschlussende 11 installiert, also im Turmkopf.

Jede Tilgergruppe 41a, 41b, 41c, 41d, 41e umfasst eine Vielzahl von einzelnen Schwingungstilgern 42a, 42b, 42c, 42d, 42e. Die einzelnen Schwingungstilger 42a, 42b, 42c, 42d, 42e der jeweiligen Tilgergruppe 41a, 41b, 41c, 41d, 41e sind an der Umfangswand 14 des Turms 10 installiert. Genauer sind sie in diesem Beispiel an einer Innenseite der Umfangswand 14 befestigt. Dabei sind die einzelnen Schwingungstilger 42a, 42b, 42c, 42d, 42e der jeweiligen Tilgergruppe 41a, 41b, 41c, 41d, 41e entlang einer Umfangsrichtung CD verteilt angeordnet, in diesem Ausführungsbeispiel in gleichen (Umfangs-)Abständen CS entlang der Umfangsrichtung CD. Die einzelnen Schwingungstilger 42a, 42b, 42c, 42d, 42e der jeweiligen Tilgergruppe 41a, 41b, 41c, 41d, 41e sind hier ringförmig angeordnet, weiter im Detail ringförmig um eine Längsachse LA des ersten Bauelements (hier des Turms 10). Jede der Tilgergruppen 41a, 41b, 41c, 41d, 41e bildet also mit der Vielzahl der zugehörigen einzelnen Schwingungstilger 42a, 42b, 42c, 42d, 42e einen individuellen "Tilgerring".

So umfasst beispielsweise eine erste Tilgergruppe 41a (der erste Tilgerring), die dem Anschlussende 11 am nächsten liegt, eine Vielzahl von ersten einzelnen Schwingungstilgern 42a. Die erste Tilgergruppe 41 muss nicht unmittelbar an dem Anschlussende 11 installiert sein. Sie kann aber beispielsweise unmittelbar an dem Anschlussende 11 oder unmittelbar in der Nähe des Anschlussendes 11 installiert sein. Eine benachbarte zweite Tilgergruppe 41b (ein zweiter Tilgerring) umfasst eine Vielzahl von zweiten einzelnen Schwingungstilgern 42b, und so weiter.

Die Tilgergruppen 41a, 41b, 41c, 41d, 41e sind entlang der Längsrichtung LD voneinander beabstandet. In diesem Beispiel sind alle benachbarten Tilgergruppen 41a, 41b, 41c, 41d, 41e gleichmäßig mit einem (Längs-)Abstand LS voneinander beabstandet. In Modifikationen (nicht gezeigt), können sich die Längsabstände einzelner benachbarter Tilgergruppen 41a, 41b, 41c, 41d, 41e oder aller benachbarter Tilgergruppen 41a, 41b, 41c, 41d, 41e unterscheiden.

In dieser Ausführungsform existiert in den (Längs-)Abständen LS zwischen benachbarten Tilgergruppen 41a, 41b, 41c, 41d, 41e jeweils ein "tilgerfreier Bereich" ohne einzelne Schwingungstilger 42a, 42b, 42c, 42d, 42e.

Jede der Tilgergruppen 41a, 41b, 41c, 41d, 41e hat eine eigene Eigenfrequenz. Dabei sind die Eigenfrequenzen aller Tilgergruppen 41a, 41b, 41c, 41d, 41e unterschiedlich. Dadurch ermöglicht die Schwingungstilgeranordnung eine Reduktion von Vibrationen mehrerer unterschiedlicher Frequenzen bzw. in mehreren verschiedenen Frequenzbereichen. Die einzelnen Eigenfrequenzen können jeweils auf eine bestimmte Tonhaltigkeit ausgelegt sein.

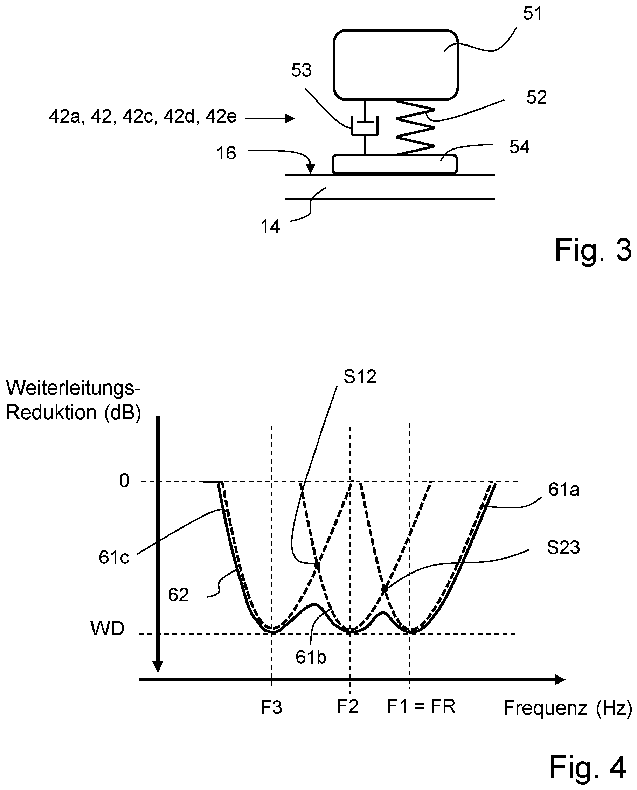

In dem vorliegenden Beispiel umfassen alle einzelnen Schwingungstilger 42a, 42b, 42c, 42d, 42e jeweils eine Tilgermasse 51, eine Steifigkeit 52 und ein Dämpfungselement 53. Dies ist in Fig. 4 schematisch gezeigt. Ferner zeigt Fig. 4 schematisch einen Magnetfuß 54 des Schwingungstilgers 42a, 42b, 42c, 42d, 42e als eine Möglichkeit, mittels welcher der Schwingungstilger 42a, 42b, 42c, 42d, 42e an der Umfangswand 14 befestigt werden kann.

Die Tilgermasse 51 kann aus Metall gefertigt sein, beispielsweise aus Stahl.

Die Tilgermasse 51 ist über die Steifigkeit 52 an einer Umfangswand 14 des Turms 10 befestigt, hier an einer Innenseite der Umfangswand 14. Die Tilgermasse 51 ist über die Steifigkeit 52 lokal an die Umfangswand 14 gekoppelt.

Die Steifigkeit 52 hat elastische Eigenschaften und ermöglicht begrenzte relative Bewegungen der Tilgermasse 51 bezüglich der Umfangswand 14, genauer gesagt bezüglich der Stelle der Umfangswand 14, an welcher der Schwingungstilger 42a, 42b, 42c, 42d, 42e befestigt ist. Insbesondere kann die Steifigkeit eine begrenzte relative Bewegung der Tilgermasse 51 bezüglich der Stelle der Umfangswand 14, an welcher der Schwingungstilger 42a, 42b, 42c, 42d, 42e, 42e befestigt ist, in radialer Richtung des Turms 10 ermöglichen. Dadurch kann die Tilgermasse 51 relativ zu der Umfangswand 14 (genauer: relativ zu der Stelle der Umfangswand 14, an welcher der Schwingungstilger 42a, 42b, 42c, 42d, 42e befestigt ist) in Schwingung geraten. Durch die entsprechende mechanische Anregung wird Schwingungsenergie in dem Schwingungstilger 42a, 42b, 42c, 42d, 42e gespeichert. Die manifestiert sich in einem Wechsel von kinetischer Energie und potenzieller Energie (vgl. die Elastizität der Steifigkeit 52). Die relative Schwingung der Tilgermasse 51 zu der Umfangswand 14 bzw. dem Magnetfuß 54 wird durch das Dämpfungselement 53 gedämpft. Das Dämpfungselement 53 kann somit Schwingungsenergie abbauen/reduzieren. Das Dämpfungselement 53 kann beispielsweise aus Silikonschaum gefertigt sein und die Schwingungsenergie durch Umwandlung in Wärme reduzieren.

Die einzelnen Schwingungstilger 42a, 42b, 42c, 42d, 42e einer jeweiligen der Tilgergruppen 41a, 41b, 41c, 41d, 41e haben dieselbe Eigenfrequenz, nämlich die Eigenfrequenz dieser Tilgergruppe 41a, 41b, 41c, 41d, 41e. Die Eigenfrequenz der einzelnen Schwingungstilger 42a, 42b, 42c, 42d, 42e und damit der jeweiligen Tilgergruppen 41a, 41b, 41c, 41d, 41e lässt sich anhand einer Größe der Tilgermasse 51, anhand der Elastizität (insbesondere einer effektiven Federkonstante) der Steifigkeit 52, und den Dämpfungseigenschaften des Dämpfungselements 53 verändern und somit gezielt auslegen. Gemäß einem Aspekt können alle einzelnen Schwingungstilger 42a, 42b, 42c, 42d, 42e derselben Tilgergruppe 41a, 41b, 41c, 41d, 41e jeweils vom selben Typ sein, insbesondere baugleich. Das reduziert die Kosten.

Insbesondere können die Schwingungstilger 42a, 42b, 42c, 42d, 42e innerhalb der jeweiligen Tilgergruppe 41a, 41b, 41c, 41d, 41e jeweils die gleiche Weiterleitungsreduktionskurve 61a, 61b, 61c (siehe Fig. 4) für Vibrationen aufweisen. Insofern kann man auch von der Weiterleitungsreduktionskurve 61, 61b, 61c der jeweiligen Tilgergruppe 41a, 41b, 41c, 41d, 41e (des jeweiligen Tilgerrings) sprechen. Die Weiterleitungsreduktionskurve 61, 61b, 61c wird durch die Größe der Tilgermasse 51, die Elastizität der Steifigkeit 52 und die Dämpfungseigenschaften des Dämpfungselements 53 bestimmt.

Hier unterscheiden sich die die einzelnen Schwingungstilger 42a, 42b, 42c, 42d, 42e einer jeweiligen Tilgergruppe 41a, 41b, 41c, 41d, 41e in ihrer Tilgermasse 51, in ihrer Steifigkeit 52 und/oder in ihrem Dämpfungselement 53 von den einzelnen Schwingungstilgern 42a, 42b, 42c, 42d, 42e der anderen Tilgergruppen 41a, 41b, 41c, 41d, 41e.

Gemäß einem anderen Aspekt sind in dem Endabschnitt 12 an der Umfangswand 14 entlang der Längsrichtung LD voneinander beabstandet hintereinander einzelne (bspw.) Schwingungstilger 42a, 42b, 42c, 42d, 42e mit unterschiedlichen Eigenfrequenzen installiert. Durch Wiederholung dieser linearen "Tilgerkette" entlang der Umfangsrichtung, beispielsweise in gleichmäßigen Winkelabstände um die Längsachse LA, kann die Schwingungstilgeranordnung 40 gebildet sein.

In Fig. 2 sind alle einzelnen Schwingungstilger 42a, 42b, 42c, 42d, 42e als passive Schwingungstilger ausgeführt. Das mach die Schwingungstilgeranordnung 40 besonders kostengünstig, einfach und zuverlässig.

Im Allgemeinen muss die erste Tilgergruppe 41a nicht unmittelbar an oder unmittelbar in der Nähe des Anschlussendes 11 angeordnet sein. Es kann jedoch optional vorgesehen sein, dass zumindest die erste Tilgergruppe 41a in einem Bereich angeordnet ist, der sich in der Längsrichtung L10 von dem Anschlussende 11 ausgehend nur über 10 % der Gesamtlänge L10 des ersten Bauelements (hier des Turms 10) erstreckt. Bei der Ausführungsform In Fig. 2 ist die erste Tilgergruppe 41a sogar unmittelbar an dem Anschlussende 11 oder unmittelbar in der Nähe des Anschlussendes 11 angeordnet. Ferner ist zumindest auch die zweite Tilgergruppe 41b in dem Bereich angeordnet, der sich in der Längsrichtung L10 von dem Anschlussende 11 ausgehend nur über 10 % der Gesamtlänge L10 des ersten Bauelements (hier des Turms 10) erstreckt. Auch eine dritte Tilgergruppe 41c, die der zweiten Tilgergruppe 41b entlang der Längsrichtung LD auf der anderen Seite als die erste Tilgergruppe 41a benachbart ist, kann in diesem Bereich angeordnet sein.

In dieser exemplarischen Ausführungsform erstreckt sich der Endabschnitt 12, in welchem alle Tilgergruppen 41a, 41b, 41c, 41d, 41e angeordnet sind, von dem Anschlussende 11 ausgehend über maximal 14 % der Gesamtlänge L10 des ersten Bauelement 10 entlang der Längsrichtung LD, beispielsweise über maximal 14 %. Der Hauptbereich 13 des ersten Bauelements, hier des Turms 10, ist entsprechend groß. Da die Reduktion der Weiterleitung der Vibrationen in dem verhältnismäßig kurzen Endabschnitt 12 direkt an dem Anschlussende 11 erfolgt, erreicht ein wegreduzierter Anteil der für die Tonhaltigkeiten relevanten Vibrationen den viel größeren Hauptbereich 13 gar nicht. Der Hauptbereich 13 kann also nicht oder nur stark abgemildert als problematische akustischer Abstrahler in Erscheinung treten. Ein Vorteil liegt darin, dass in dem Hauptbereich 13 keinerlei Tilgergruppen 41a, 41b, 41c, 41d, 41e und keinerlei einzelne Schwingungstilger 42a, 42b, 42c, 42d, 42e installiert sein müssen. Der Hauptbereich 13 ist in der gezeigten Ausführungsform "tilgerfrei". Das bedeutet erheblich weniger Aufwand und Kosten als bei einer großflächigen Dämpfung des Turms 10.

Entscheidend für eine besonders gute Reduzierung der Tonhaltigkeiten der Windenergieanlage 1 ist die zielgerichtete Anordnung der Tilgergruppen 41a, 41b, 41c, 41d, 41e und der Schwingungstilger 42a, 42b, 42c, 42d, 42e.

Die Erfindung ermöglicht eine zuverlässige und effektive Barriere zum Stopp der Weiterleitung von Vibrationen in dem Turm, insbesondere von spezifischen Vibrationen, die aus der Windenergieanlagen-Gondel 20 stammen.

Die einzelnen Schwingungstilger 42a, 42b, 42c, 42d, 42e sind gezielt in einer Matrix angeordnet. Die Matrix erstreckt sich entlang der Umfangswand 14 zweidimensional (in der Längsrichtung LD und in der Umfangsrichtung CD).

Die Schwingungsanordnung 40 ist so ausgelegt, dass sie die Propagation von Biegeschwingungen der Umfangswand 14 von dem Anschlussende 11 zu einem Bereich des Turms 10 unterhalb der Schwingungsanordnung 40 signifikant unterdrückt.

Dazu können als Auslegungsparameter definiert werden:
- Eine Reduktion von mindestens ZX (beispielsweise in Einheit gemäß dekadischem Logarithmus, insbesondere dB)
- ausgehend von einer Referenzfrequenz F1 (beispielsweise in Hz)
- über einen Frequenzbereich ZW (beispielsweise in Hz).

Dabei kann der Frequenzbereich ZW ausgehend von der Referenzfrequenz F1 hin zu kleineren Frequenzen definiert sein, beispielsweise von F1 bis zu einer Frequenz FN < F1, FN = F1 - ZW.

Wichtige Parameter zur Auslegung der Schwingungstilgeranordnung 40 können einer, mehrere oder alle der Folgenden sein:
die Abstände LS der Schwingungstilger 42a, 42b, 42c, 42d, 42e entlang der Längsrichtung LD,
eine Anzahl der der Schwingungstilger 42a, 42b, 42c, 42d, 42e entlang der Längsrichtung LD,
die Abstände CS der Schwingungstilger 42a, 42b, 42c, 42d, 42e entlang der Umgangsrichtung CD, und
eine Anzahl der der Schwingungstilger 42a, 42b, 42c, 42d, 42e entlang der Umfangsrichtung CD.

Die Größe der Tilgermassen 51, die Elastizitäten der Steifigkeiten 52 und die Dämpfungseigenschaften (insbesondere die modale Dämpfung) der Schwingungstilger 42a, 42b, 42c, 42d, 42e können ebenfalls relevante Parameter sein.

Als zusätzlichen Input für die Auslegung der Schwingungstilgeranordnung 40 können beispielswiese folgende Größe dienen:
- Ein Durchmesser des Turms 10 (der Umfangswand 14),
- eine Wanddicke der Umfangswand 14, und/oder
- ein Material bzw. Materialien des Turms 10 (insbesondere der Umfangswand 14)

In einem Schritt kann diejenige Biegeeigenform für (modale) Biegewellen der Umfangswand 14 entlang der Umfangsrichtung CD bestimmt werden, deren Eigenfrequenz am nächsten an der Referenzfrequenz FR liegt (also diejenige "Umfangs-Biegeeigenform", deren Eigenfrequenz am wenigsten von der Referenzfrequenz FR abweicht). Für diese Biegeeigenform der Umfangswand 14 entlang der Umfangsrichtung CD kann eine zugehörige Wellenlänge entlang der Umfangsrichtung CD bestimmt werden, die sogenannte Umfangs-Wellenlänge UW.

Alternativ oder zusätzlich kann diejenige Biegeeigenform für (modale) Biegewellen der Umfangswand 14 entlang der Längsrichtung LD bestimmt werden, deren Eigenfrequenz am nächsten an der Referenzfrequenz FR liegt (also diejenige "Längs-Biegeeigenform", deren Eigenfrequenz am wenigsten von der Referenzfrequenz FR abweicht). Für diese Biegeeigenform der Umfangswand 14 entlang der Längsrichtung LD kann eine zugehörige Wellenlänge entlang der Längsrichtung LD bestimmt werden, die sogenannte Längs-Wellenlänge LW.

Ein Versatz (ein Abstand LS) benachbarter Tilgergruppen 41a, 41b, 41c, 41d, 41e in der Längsrichtung LD und damit ein Versatz (der Abstand LS) der Schwingungstilger 42a, 42b, 42c, 42d, 42e in der Längsrichtung LD, die entlang der Längsrichtung LD benachbart sind, kann jeweils als LW/2 * LF gewählt sein und insbesondere maximal LW/2 * LFmax betragen. Dabei ist LFmax <= 1. Insbesondere kann LFmax <= 0,7 sein, um Inhomogenitäten im Turm 10 oder in dessen Materialien und ggf. Umwelteinflüssen Rechnung zu tragen.

Der Abstand LS kann jeweils mindestens LW/2 * LFmin betragen. Dabei ist LFmin >= 0. Insbesondere kann LFmin >= 0,3 sein, um die Anzahl der Schwingungstilger 42a, 42b, 42c, 42d, 42e nicht übermäßig hoch werden zu lassen.

Im Allgemeinen können die Längsfaktoren LF (und damit die Abstände LS) für verschiedene benachbarte Tilgergruppen 41a, 41b, 41c, 41d, 41e innerhalb der genannten Bereiche variieren. Natürlich können die Längsfaktoren LF (und damit die Abstände LS) jeweils gleich sein. Das entspricht einer gleichmäßigen / äquidistanten Anordnung der Schwingungstilger 42a, 42b, 42c, 42d, 42e in der Längsrichtung LD.

Ein Versatz (ein Abstand CS) benachbarter Schwingungstilger 42a, 42b, 42c, 42d, 42e (in der gleichen Tilgergruppe 41a, 41b, 41c, 41d, 41e) in der Umfangsrichtung CD kann jeweils UW/2 * UF sein, insbesondere jeweils maximal UW/2 * UFmax betragen. Dabei ist UFmax <= 1. Insbesondere kann UFmax <= 0,7 sein, um Inhomogenitäten im Turm 10 oder in dessen Materialien und ggf. Umwelteinflüssen Rechnung zu tragen.

Der Abstand CS kann jeweils minimal UW/2 * UFmin betragen. Dabei ist UFmin >= 0. Insbesondere kann UFmin >= 0,3 sein, um die Anzahl der Schwingungstilger 42a, 42b, 42c, 42d, 42e nicht übermäßig hoch werden zu lassen.

Im Allgemeinen können die Umfangsfaktoren UF (und damit die Abstände CS) für Schwingungstilger 42a, 42b, 42c, 42d, 42e innerhalb der genannten Bereiche variieren. Natürlich können die Umfangsfaktoren UF (und damit die Abstände CS) jeweils innerhalb der gleichen Tilgergruppe 41a, 41b, 41c, 41d, 41d oder sogar für alle Schwingungstilger 42a, 42b, 42c, 42d, 42e gleich sein. Das entspricht einer gleichmäßigen / äquidistanten Anordnung der Schwingungstilger 42a, 42b, 42c, 42d, 42e in der Umfangsrichtung CD.

Die genannten Abstände LS und CS helfen dabei, dass die Schwingungstilgeranordnung 40 für den kompletten Frequenzbereich ZW räumlich hinreichend dicht ist und effektiv wirkt.

Die gesamte Schwingungstilgeranordnung 40 kann entlang der Längsrichtung LD eine Längenausdehnung L40 hat, die in einem Bereich von 100 % bis 500 % (möglicherweise 100 % bis 400 %) der Längs-Wellenlänge LW liegt. Das stellt eine ausreichende Dämpfung bei vergleichsweise geringem konstruktivem und wirtschaftlichem Aufwand dar.

Außerdem kann die Schwingungstilgeranordnung 40 im Vergleich zu einer Masse eines Abschnitts der Umfangswand 14, über welchen sich die Schwingungstilgeranordnung 40 entlang der Längsrechnung LD erstreckt (hier der Endabschnitt 12), eine Masse im Bereich von 1 % bis 20 % aufweisen.

Die Schwingungstilgeranordnung 40 ist so ausgelegt, dass die Schwingungstilger 42a der Tilgergruppe 41a, welche dem Anschlussende 11 am nächsten ist (siehe oberste Tilgergruppe 41a in Fig. 2), eine Eigenfrequenz bei der Referenzfrequenz F1 haben. Die Schwingungstilger 42e der Tilgergruppe 41e, die am gegenüberliegenden (in Fig. 2 unteren) Ende der Schwingungstilgeranordnung 40 angeordnet sind, haben die Eigenfrequenz FN = F1 - ZW. Dabei ist FN < F1. Dazwischen verringern sich die Eigenfrequenzen der Schwingungstilger 42b, 42c, 42d der in Längsrichtung LD dazwischenliegenden Tilgergruppen 41b, 41c, 42d, mit zunehmender Entfernung von dem Anschlussende 11 beispielsweise gleichmäßig schrittweise. Das kann gemäß der Vorschrift FK = F1 - (K-1)*(F1-FN)/(N-1) erfolgen. N ist dabei eine Anzahl der Tilgergruppen 41a, 41b, 41c, 41d, 41e. In Fig. 3 ist N = 5. K ist dabei die Zahl der jeweiligen Tilgergruppe 41a, 41b, 41c, 41d, 41e entlang der Längsrichtung, gesehen ausgehend von der Tilgergruppe 41a mit der Referenzfrequenz F1 als Eigenfrequenz. So haben die Schwingungstilger 42b der zweitobersten Tilgergruppe 41b die Eigenfrequenz F2 = F1 - (2-1)*(F1-FN)/(5-1) und die Schwingungstilger 42c der drittobersten Tilgergruppe 41c haben die Eigenfrequenz F3 = F1 - (3-1)*(F1-FN)/(5-1).

Alternativ haben die Schwingungstilger 42e, die der Tilgergruppe 41e, welche dem Anschlussende 11 am fernsten ist (siehe unterste Tilgergruppe 41e in Fig. 2), die Eigenfrequenz bei der Referenzfrequenz F1 und die die Schwingungstilger 42a der Tilgergruppe 41a, welche dem Anschlussende 11 am nächsten ist, hat die Eigenfrequenz FN = F1 - ZW. Dazwischen erhöhen sich die Eigenfrequenzen der Schwingungstilger 42b, 42c, 42d der in Längsrichtung LD dazwischenliegenden Tilgergruppen 41b, 41c, 42d mit zunehmender Entfernung von dem Anschlussende 11 beispielsweise gleichmäßig schrittweise. Die jeweiligen Eigenfrequenzen können wie im vorigen Absatz beschrieben "linear interpoliert" werden.

Ein weiterer spezifischer Punkt betrifft ein Überlappen der jeweiligen Weiterleitungsreduktionskurven 61, 61b, 61c benachbarter Tilgergruppen 41a, 41b, 41c, 41d, 41e (und entsprechend in der Längsrichtung LD benachbarter Schwingungstilger 42a, 42b, 42c, 42d, 42e). Dies ist anhand von Fig. 4 verdeutlicht. In Fig. 4 sind exemplarisch drei Weiterleitungsreduktionskurven 61a, 61b, 61c dargestellt, beispielsweise für die obersten drei Tilgergruppen 41a, 41b, 41c in Fig. 2. In der einzelnen Weiterleitungsreduktionskurven 61a, 61b, 61c tritt eine Maximalreduktion WD an der zugehörigen Eigenfrequenz F1, F2, F3 auf. Die Eigenfrequenzen F1, F2, F3 unterscheiden sich jeweils voneinander. Benachbarte Weiterleitungsreduktionskurven 61a, 61b, 61c liegen aber jeweils so nahe beieinander, dass sie erheblich überlappen. An den Schnittpunkten S12, S23, an welchen sich die benachbarten Weiterleitungsreduktionskurven 61a, 61b, 61c schneiden, beträgt für beide benachbarten Weiterleitungsreduktionskurven 61a, 61b, 61c die Dämpfung jeweils noch mindestens 0,5 der Maximalreduktion WD (in einer Skala des dekadischen Logarithmus, beispielsweise in dB-Skala), in einer Ausführungsform sogar noch mindestens 0,6.

Durch die engen Abstände CS, LS ergibt sich ein Weiterleitungsbarriere für Vibrationen in dem Endabschnitt 12, die für die relevanten Längs-Wellenlängen LW und die relevanten Umfangs-Wellenlängen UW hinreichend gleichförmig und hinreichend räumlich dicht ist. Durch die verschiedenen Eigenfrequenzen F1 bis FN und den starken Überlapp der benachbarten Weiterleitungsreduktionskurven 61, 61b, 61c wird eine hinreichende Reduktion der Vibration über den gesamten Frequenzbereich von FN = F1 - ZW bis F1 sichergestellt. Die Anpassung von zumindest einer der Eigenfrequenzen F1, F2 bis FN an die relevanten Vibrationen des Antriebsstrangs erleichtert die zielgerichtete Verringerung besonders problematischer Tonhaltigkeiten.

Die Schwingungstilgeranordnung 40 erzeugt durch die Überlagerung der Weiterleitungsreduktionskurven 61a, 61b, 61c eine "Gesamt-Frequenzweiterleitungsbarriere" 62. Die Gesamt- Frequenzweiterleitungsbarriere 62 kann beispielsweise eine Breite im Frequenzbereich von 1 Hz bis 150 Hz haben. Alternativ oder zusätzlich kann sie beispielsweise eine Maximalreduzierung von 1 dB bis 25 dB aufweisen.

## Patentansprüche

1. Schwingungstilgeranordnung (40 für einen Turm (10) einer Windenergieanlage (1), wobei der Turm (10) an einem Anschlussende (11) entlang einer Längsrichtung (LD) des Turms (10) zur mechanischen Verbindung mit einer Windenergieanlagen-Gondel (20) eingerichtet ist,
wobei die Schwingungstilgeranordnung (40) mindestens zwei Tilgergruppen (41a, 41b, 41c, 41d, 41e) umfasst, welche in einem Endabschnitt (12) des Turms (10) mit dem Anschlussende (11) angeordnet sind und entlang der Längsrichtung (LD) voneinander beabstandet sind,
wobei jede der Tilgergruppen (41a, 41b, 41c, 41d, 41e) eine Vielzahl von einzelnen Schwingungstilgern (42a, 42b, 42c, 42d, 42e) umfasst, die an einer Umfangswand (14) des Turms (10) entlang einer Umfangsrichtung (CD) verteilt angeordnet sind,
wobei die Tilgergruppen (41a, 41b, 41c, 41d, 41e) voneinander unterschiedliche Eigenfrequenzen aufweisen,
**dadurch gekennzeichnet, dass** die Schwingungstilger (42a, 42b, 42C, 42d, 42e) jeweils aufweisen:
eine Tilgermasse (51);
eine elastische Steifigkeit (52) zur mechanischen Kopplung der Tilgermasse (51) relativ zu der Umfangswand (14), wobei die Steifigkeit (52) Bewegungen der Tilgermasse (51) relativ zu der Umfangswand (14) erlaubt; und
ein Dämpfungselement (53) zur Dämpfung von den Bewegungen der Tilgermasse (51) relativ zu der Umfangswand (14) durch Reduzierung von Schwingungsenergie; und
dass
- Abstände (CS) benachbarter Schwingungstilger (42a, 42b, 42c, 42d, 42e) der gleichen Tilgergruppe (41a, 41b, 41c, 41d, 41e) entlang der Umfangsrichtung (CD) UW/2 * UF betragen, wobei UW eine Umfangs-Wellenlänge für eine Biegeeigenform der Umfangswand (14) entlang der Umfangsrichtung (CD) ist, deren Eigenfrequenz einer Referenzfrequenz F1 am nächsten ist, und UF jeweils ein Abstandsfaktor ist, der größer als 0 und maximal 1 ist, und/oder
- Abstände (LS) benachbarter Tilgergruppen (41a, 41b, 41c, 41d, 41e) entlang der Längsrichtung (LD) LW/2 * LF betragen, wobei LW eine Längs-Wellenlänge für eine Biegeeigenform der Umfangswand (14) entlang der Längsrichtung (LD) ist, deren Eigenfrequenz der Referenzfrequenz F1 am nächsten ist, und LF jeweils ein Abstandsfaktor ist, der größer als 0 und maximal 1 ist.

2. Schwingungstilgeranordnung (40) nach Anspruch 1, wobei die Referenzfrequenz F1 eine Frequenz von Vibrationen, die von einem Getriebe (22) und/oder einem Generator (23) in der Windenergieanlagen-Gondel (20) erzeugt werden, ist, und/oder
wobei die Referenzfrequenz F1 nicht auf eine Eigenfrequenz des Turms (10) ausgelegt ist.

3. Schwingungstilgeranordnung (40) nach Anspruch 1 oder 2, wobei der Abstandsfaktor UF jeweils mindestens 0,3 und/oder maximal 0,7 ist.

4. Schwingungstilgeranordnung (40) nach einem der vorhergehenden Ansprüche, wobei der Abstandsfaktor LF jeweils mindestens 0,3 und/oder maximal 0,7 ist.

5. Schwingungstilgeranordnung (40) nach einem der vorhergehenden Ansprüche, wobei die Abstandsfaktoren UF und die Abstandsfaktoren LF jeweils gleich sind.

6. Schwingungstilgeranordnung (40) nach einem der vorhergehenden Ansprüche, wobei eine oberste Tilgergruppe (41a) dem Anschlussende (11) entlang der Längsrichtung (LD) am nächsten angeordnet ist und eine unterste Tilgergruppe (41e) dem Anschlussende (11) in der Längsrichtung (LD) am fernsten angeordnet ist, und wobei
- die Schwingungstilger (42a) der obersten Tilgergruppe (41a) die Referenzfrequenz F1 als Eigenfrequenz haben und die Schwingungstilger (42e) der untersten Tilgergruppe (41e) eine Eigenfrequenz FN haben oder
- die Schwingungstilger (42e) der untersten Tilgergruppe (41e) die Referenzfrequenz F1 als Eigenfrequenz haben und die Schwingungstilger (42a) der obersten Tilgergruppe (41a) eine Eigenfrequenz FN haben,
wobei sich die Eigenfrequenz FN von der Referenzfrequenz F1 unterscheidet.

7. Schwingungstilgeranordnung (40) nach Anspruch 6, wobei die Eigenfrequenz FN niedriger ist als die Referenzfrequenz F1 und eine Anzahl der Tilgergruppen N ist,
wobei sich die Eigenfrequenz der Schwingungstilger (42a, 42b, 42c, 42d, 42e) der K-ten Tilgergruppe (41a, 41b, 41c, 41d, 41e) jeweils ergibt als FK = F1 - (K - 1)*(F1 - FN)/(N - 1), wobei die Zahl K die Position der jeweiligen Tilgergruppe (41a, 41b, 41c, 41d, 41e) in der Reihenfolge der Tilgergruppen (41a, 41b, 41c, 41d, 41e) entlang der Längsrichtung (LD) von der Tilgergruppe (41a, 41e) mit der Referenzfrequenz F1 als Eigenfrequenz zu der Tilgergruppe (41e, 41a) mit der Eigenfrequenz FN hin angibt.

8. Schwingungstilgeranordnung (40) nach einem der vorhergehenden Ansprüche, wobei die Eigenfrequenzen der Schwingungstilger (42a, 42b, 42c, 42d, 42e) für entlang der Längsrichtung (LD) benachbarte Tilgergruppen (41a, 41b, 41c, 41d, 41e) jeweils so nahe beieinander liegen, dass sich die Weiterleitungsreduktionskurven (61a, 61b, 61c) der Schwingungstilger (42a, 42b, 42c, 42d, 42e) benachbarter Tilgergruppen (41a, 41b, 41c, 42d, 42e) über der Frequenz jeweils derart überlappen, dass an einem Schnittpunkt (S12, S23) der jeweiligen Weiterleitungsreduktionskurven (61a, 61b, 61c) für beide Weiterleitungsreduktionskurven (61a, 61b, 61c) die frequenzabhängigen Reduktionen, in einer Maßangabe gemäß dekadischem Logarithmus, jeweils noch gleich stark oder stärker sind als die Hälfte eines Reduktionsziels und/oder einer Maximalreduktion (WD) der jeweiligen Weiterleitungsreduktionskurve (61a, 61b, 61c).

9. Schwingungstilgeranordnung nach einem der vorhergehenden Ansprüche, wobei die Schwingungstilgeranordnung (40) dazu eingerichtet ist, eine akustische Abstrahlung von dem Turm (10) aufgrund von Vibrationen eines Antriebsstrangs (22, 23) der Windenergieanlagen-Gondel (20) zu reduzieren, indem sich durch eine Superposition der Weiterleitungskurven (61a, 61b, 61c) aller Tilgergruppen (41a, 41b, 41c, 41d, 41e) ein Weiterleitungsbarriere für Biegewellen der Umfangswand (14) im Bereich der Schwingungstilgeranordnung (40) ergibt.

10. Schwingungstilgeranordnung (40) nach einem der vorhergehenden Ansprüche, wobei die gesamte Schwingungstilgeranordnung (40) entlang der Längsrichtung (LD) eine Längenausdehnung (L40) hat, die in einem Bereich von 100 % bis 500 % der Längs-Wellenlänge LW liegt.

11. Schwingungstilgeranordnung (40) nach einem der vorhergehenden Ansprüche, wobei die Schwingungstilgeranordnung (40) derart angeordnet ist, dass die Schwingungstilgeranordnung (40) im Vergleich zu einer Masse eines Abschnitts der Umfangswand (14), über welchen sich die Schwingungstilgeranordnung (40) entlang der Längsrichtung (LD) erstreckt, eine Masse im Bereich von 1 % bis 20 % aufweist.

12. Schwingungstilgeranordnung (40) nach einem der vorhergehenden Ansprüche, wobei die Dämpfungselemente (53) der Schwingungstilger (42a, 42b, 42c, 42d, 42e) Elastomer-Dämpfungselemente umfassen.

13. Schwingungstilgeranordnung (40) nach Anspruch 12, wobei die Dämpfungselemente (53) zumindest teilweise aus Silikonschaum gefertigt sind.

14. Schwingungstilgeranordnung (40) nach einem der vorhergehenden Ansprüche, wobei die Schwingungstilger (42a, 42b, 42c, 42d, 42e) magnetisch an dem Turm (10) befestigt sind.

15. Schwingungstilgeranordnung (40) nach einem der vorhergehenden Ansprüche, wobei die Schwingungstilger (42a, 42b, 42c, 42d, 42e) an einer Innenseite (16) der Umfangswand (14) befestigt sind.

16. Schwingungstilgeranordnung (40) nach einem der vorhergehenden Ansprüche, wobei die einzelnen Schwingungstilger (42a, 42b, 42c, 42d, 42e) innerhalb der jeweiligen Tilgergruppe (41a, 41b, 41c, 41d, 41e) die gleiche Eigenfrequenz aufweisen und vom gleichen Typ sind,
wobei sich die einzelnen Schwingungstilger (42a, 42b, 42c, 42d, 42e) einer jeweiligen Tilgergruppe (41a, 41b, 41c, 41d, 41e) in ihrer Tilgermasse, in ihrer Steifigkeit und/oder in ihrem Dämpfungselement (53) von den einzelnen Schwingungstilgern (42a, 42b, 42c, 42d, 42e) der anderen Tilgergruppen (41a, 41b, 41c, 41d, 41e) unterscheiden.

17. Windenergieanlage (1), **dadurch gekennzeichnet, dass** die Windenergieanlage (1) eine Schwingungstilgeranordnung (40) nach einer der vorhergehenden Ansprüche umfasst.

18. Verfahren zur Auslegung einer Schwingungstilgeranordnung (40) für einen Turm (10) einer Windenergieanlage (1) mit einer Umfangswand (14) des Turms (10), beispielsweise für die Schwingungstilgeranordnung (40) nach einem der Ansprüche 1 bis 16 und/oder für die Windenergieanlage (1) nach Anspruch 17, **gekennzeichnet durch**:
- Anordnung von Schwingungstilgern (42a, 42b, 42c, 42d, 42e) mit Dämpfungseigenschaften in mindestens zwei Tilgergruppen (41a, 41b, 41c, 41d, 41e) an der Umfangswand (14), wobei die Schwingungstilger (42a, 42b, 42c, 42d, 42e) jeweils eine Tilgermasse (51), eine elastische Steifigkeit (52) zu mechanischen Kopplung der Tilgermasse (51) relativ zu der Umfangswand (14) und ein Dämpfungselement (53) zur Dämpfung von den Bewegungen der Tilgermasse (51) relativ zu der Umfangswand (14) durch Umwandlung von Schwingungsenergie in Wärmeabgabe aufweist, wobei die Tilgergruppen (41a, 41b, 41c, 41d, 41e) voneinander unterschiedliche Eigenfrequenzen aufweisen,
- Anordnung der Schwingungstilger (42a, 42b, 42c, 42d, 42e), sodass:
Abstände (CS) benachbarter Schwingungstilger (42a, 42b, 42c, 42d, 42e) der gleichen Tilgergruppe (41a, 41b, 41c, 41d, 41e) entlang einer Umfangsrichtung (CD) des Turms (10) maximal UW/2 * UF betragen, wobei UW eine Umfangs-Wellenlänge für eine Biegeeigenform der Umfangswand (14) entlang der Umfangsrichtung (CD) ist, deren Eigenfrequenz einer Referenzfrequenz F1 am nächsten ist, und UF jeweils ein Abstandsfaktor ist, der größer als 0 und maximal 1 ist, und/oder
Abstände (LS) benachbarter Tilgergruppen (41a, 41b, 41c, 41d, 41e) entlang einer Längsrichtung (LD) des Turms (10) maximal LW/2 * LF betragen, wobei LW eine Längs-Wellenlänge für eine Biegeeigenform der Umfangswand (14) entlang der Längsrichtung (LD) ist, deren Eigenfrequenz der Referenzfrequenz F1 am nächsten ist, und LF jeweils ein Abstandsfaktor ist, der größer als 0 und maximal 1 ist.

19. Verfahren nach Anspruch 18, ferner umfassend:
- Bestimmen der Referenzfrequenz F1, wobei die Referenzfrequenz F1 einer Vibration eines Antriebsstrangs (22, 23) der Windenergieanlagen-Gondel (20) entspricht.

20. Verfahren nach Anspruch 18 oder 19, ferner umfassend:
- Bestimmen der Längs-Wellenlänge LW ausgehend von der Referenzfrequenz F1; und/oder
- Bestimmen der Umfangs-Wellenlänge UW ausgehende von der Referenzfrequenz F1.
